## Europäisches Patentamt
## European Patent Office
## Office européen des brevets

(11) Veröffentlichungsnummer : **0 374 662 B1**

# EUROPÄISCHE PATENTSCHRIFT

(45) Veröffentlichungstag der Patentschrift :
**07.10.92 Patentblatt 92/41**

(51) Int. Cl.$^5$ : **C08F 210/02**, C08F 2/02,
// (C08F210/02, 220:44)

(21) Anmeldenummer : **89122782.9**

(22) Anmeldetag : **09.12.89**

(54) Verfahren zur Herstellung von Ethylen/Acrylnitril-Copolymerisaten, neue Ethylen/Acrylnitril-Copolymerisate und ihre Verwendung.

(30) Priorität : **23.12.88 DE 3843561**

(43) Veröffentlichungstag der Anmeldung :
**27.06.90 Patentblatt 90/26**

(45) Bekanntmachung des Hinweises auf die Patenterteilung :
**07.10.92 Patentblatt 92/41**

(84) Benannte Vertragsstaaten :
**DE FR GB IT**

(56) Entgegenhaltungen :
EP-A- 0 157 928
EP-A- 0 187 250
EP-A- 0 264 508
EP-A- 0 272 022

(73) Patentinhaber : **BAYER AG**
**W-5090 Leverkusen 1 Bayerwerk (DE)**

(72) Erfinder : **Obrecht, Werner, Dr.**
**Holderberger Strasse 108**
**W-4140 Moers 2 (DE)**
Erfinder : **Szentivanyi, Szolt, Dr.**
**Carl-Rumpff-Strasse 35**
**W-5090 Leverkusen (DE)**
Erfinder : **Sutter, Hubert, Dr.**
**Domblick 28**
**W-5090 Leverkusen (DE)**
Erfinder : **Herwig, Jens, Dr.**
**Nerzweg 2**
**W-5000 Köln 40 (DE)**
Erfinder : **Kolwert, Alois, Dr.**
**Im Winkel 26**
**W-5064 Roesrath (DE)**

## Beschreibung

Die Erfindung betrifft ein Verfahren zur Herstellung von Ethylen/Acrylnitril-Copolymerisaten unter Verwendung bestimmter Comonomerer durch Hochdruckpolymerisation, neue Ethylen/Acrylnitril-Copolymerisate mit einem Gehalt copolymerisierter Einheiten dieser Comonomeren und die Verwendung dieser Copolymerisate als Fließverbesserer, als Klebstoffbindemittel, als Mischungskomponente für Thermoplaste, Kautschuke und Duroplaste und zur Herstellung von Vulkanisaten.

Die Copolymerisation von Ethylen und Acrylnitril nach dem Hochdruckverfahren ist bekannt (US-PS 3 264 275). Die erhaltenen Copolymerisate sind mehr oder weniger klebrig. Die Klebrigkeit der Produkte stört bei der Herstellung insbesondere in Austragsaggregaten und bei der Granulierung. Bei der Lagerung klebenden Granulats kommt es leicht zu Verbackungen und Verblockungen und bei der Verarbeitung klebender Materialien treten Schwierigkeiten in Dosier- und Mischaggregaten auf.

Es war daher Aufgabe der Erfindung, Ethylen/Acrylnitril-Copolymerisate mit reduzierter Klebrigkeit nach dem Hochdruckmassepolymerisationsverfahren herzustellen. Die erhaltenen Copolymerisate sollen vorzugsweise weitgehend frei von gelierten Anteilen sein.

Überraschenderweise wurde gefunden, daß sich die erfindungsgemäße Aufgabe durch Copolymerisation geringer Mengen von Verbindungen mit mindestens zwei Acryloyl-bzw. Methacryloylgruppen pro Molekül wirksam verhindern läßt. Der kausale Zusammenhang zwischen erfindungsgemäßem Verfahren und reduzierter Klebeneigung ist zwar gesichert, kann aber noch nicht erklärt werden; jedoch ist sicher, daß die verminderte Klebeneigung nicht einfach auf eine Molekulargewichtserhöhung zurückgeht, weil die Copolymerisation von anderen mehrfunktionellen Comonomeren, die man im allgemeinen zur Vernetzung und damit zur Molekulargewichtserhöhung einsetzt (z.B. Divinylbenzol, Triallylcyanurat, Diallylphthalat, Triallylphosphat), keinen merklich positiven Einfluß im Sinne einer verminderten Klebeneigung hat.

Gegenstand der Erfindung ist also ein Verfahren zur Herstellung von Ethylen/Acrylnitril-Copolymerisaten mit Gehalten an einpolymerisiertem Acrylnitril von 10 bis 90, vorzugsweise von 20 bis 80, Gew.-% durch Massepolymerisation der Monomeren nach dem Hochdruckverfahren bei Drucken von 500 bis 5000 bar, vorzugsweise 1500 bis 3000 bar, dadurch gekennzeichnet, daß man die Polymerisation in Gegenwart von 50 ppm bis 2 Gew.-%, vorzugsweise von 100 ppm bis 1 Gew.-%, Bezogen auf eingesetzte polymerisierbare Monomere, (Meth-)Acryloylverbindung mit mindestens 2 Acryloyl- oder Methacryloylgruppen pro Molekül durchführt, wobei das Polymer nur aus Ethylen-, Acrylnitril- und (Meth-)Acryloyl- Einheiten besteht.

Für das erfindungsgemäße Verfahren bevorzugte (Meth-)Acryloylverbindungen umfassen Verbindungen mit einem Molekulargewicht von 126 bis 1000, vorzugsweise von 126 bis 500, beispielsweise Acrylsäureanhydrid, Methacrylsäureanhydrid, die Acrylate und Methacrylate von mehrwertigen, insbesondere von 2- und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1.2 und -1.3, Butandiol-1.2, -1.3, -2.3 und -1.4, Neopentylglykol, Hexandiolen, insbesondere Hexandiol-1.6, Cyclohexandiol-1.4, 1.4-Bis(hydroxymethyl)cyclohexan, Hydrochinon, Resorcin, Bisphenol-A, oxethyliertem Bisphenol-A, Hydrochinon-di(ß-hydroxyethyl)ether; von Glycerin, Trimethylolethan und -propan, Phloroglucin.

Bevorzugte (Meth-)Acryloylverbindungen sind auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di- und Tripropylenglykol.

Das erfindungsgemäße Verfahren kann bei Drucken von 500 bis 5000, vorzugsweise 1000 bis 3000, bar und Temperaturen von 50 bis 450°C, vorzugsweise von 120 bis 350°C, durchgeführt werden.

Das erfindungsgemäße Verfahren kann durch radikalbildende Substanzen initiiert werden. Zu den geeigneten Polymerisationsinitiatoren zählen diejenigen Verbindungen, die auch für die Hochdruckhomopolymerisation des Ethylens eingesetzt werden. Geeignet ist beispielsweise Sauerstoff, vorzugsweise in Mengen von 10 bis 1000 Mol.-ppm, bezogen auf zu polymerisierende Monomere. Andere bevorzugte Polymerisationsinitiatoren sind z.B. Azoverbindungen wie Azo-isobutyrodinitril sowie Peroxide, Hydroperoxide und ihre Mischungen, vor allem aber Mischungen von Sauerstoff und Peroxiden und/oder Hydroperoxiden. Bevorzugte Peroxide und Hydroperoxide umfassen tert.-Butylperpivalat, Di-tert.-butylperoxid, tert.-Butylhydroperoxid, tert.-Butylperbenzoat, Dilauroylperoxid, tert.-Butylperisooctanoat und tert.-Butylperisononanat. Besonders geeignet sind die Peroxide Di-tert.-butylperoxid, tert.-Butylperpivalat und tert.-Butylperisononanat.

Die Konzentration des zudosierten Initiators liegt im allgemeinen zwischen 0,001 bis 100 Mol-ppm, bevorzugt 0,1 bis 30 Mol-ppm, bezogen auf gesamte, der Polymerisation zugeführte Monomere. Als geeignetes Lösungsmittel für den Initiator werden zweckmäßig aliphatische Kohlenwasserstoffe wie Octan oder Benzin verwendet. Es können aber auch andere inerte Lösungsmittel wie Chlorbenzol, Cyclohexan oder Methanol eingesetzt werden.

Die üblichen Regler, z.B. Kohlenwasserstoffe wie Propan, Propen, iso-Octan, Ketone wie Aceton, Ethylmethylketon, Aldehyde wie Propionaldehyd wirken auch im erfindungsgemäßen Verfahren regelnd. Man verzichtet deshalb vorzugsweise auf die Zugabe solcher Substanzen. Ist ihre Verwendung, z.B. als Lösungsmittel für den Initiator oder für die Spülung von Rührwellen, unumgänglich, so kann der regelnde Einfluß dieser Verbindungen durch Höherdosierung der erfindungsgemäß zu verwendenden (Meth-)Acryloylverbindungen oder üblicher Vernetzer kompensiert werden.

Die Polymerisation erfolgt normalerweise unter adiabatischen Reaktionsbedingungen in kontinuierlichem Verfahren. Als Reaktor kann ein Rührautoklav oder eine Kaskade solcher Autoklaven verwendet werden. Für die Durchführung des erfindungsgemäßen Verfahrens ist auch ein Rohrreaktor oder eine Kombination aus einem Rührautoklaven und einem Rohrreaktor geeignet. Besonders bevorzugt wird die Serienfahrweise mit mehreren Rührautoklaven.

Das erfindungsgemäß hergestellte Copolymerisat kann beispielsweise folgendermaßen aufgearbeitet werden: Im Anschluß an die Polymerisation wird das Reaktionsgemisch in eine Hochdruckprodukttrennzone geleitet, in der ein Druck zwischen 100 und 500 bar und eine Temperatur zwischen 150 und 300°C herrscht. In diesem Hochdruckproduktabscheider wird das im Reaktor erhaltene Copolymerisat von nicht polymerisierten Monomeren abgetrennt. Aus dem Hochdruckproduktabscheider wird das Copolymerisat in die Niederdruckprodukttrennzone, in der ein Druck von unter 10 bar herrscht, geführt.

Vom Niederdruckproduktabscheider wird das erhaltene Produkt über ein Austragsaggregat geführt, abgekühlt und granuliert. Bevorzugt ist die Verwendung eines Unterwassergranulators, wobei das eingesetzte Wasser Zusätze zur weiteren Reduktion der Verklebungstendenz der Granulate enthalten kann.

Die erfindungsgemäß hergestellten Copolymerisate besitzen vorzugsweise Gelgehalte unter 0,2 Gew.-%, Bezogen auf Copolymerisat und bestimmt als unlöslicher Rückstand nach 24-stündiger Extraktion mit Chlorbenzol im Soxhlet-Aufsatz. Qualitativ können Gelanteile sehr leicht als Oberflächenrauhigkeit extrudierter Copolymerisatstränge mit Durchmessern von 2 bis 5 mm erkannt werden.

Der Schmelzflußindex (MFI) der erfindungsgemäß hergestellten Copolymerisate liegt in der Regel zwischen 0,1 g/10 min (gemessen bei 190°C/2,16 kp) und 100 g/10 min (gemessen bei 120°C/2,16 kp); ihre als Zahlenmittel $\overline{M}_n$ bestimmten Molekulargewichte liegen im Bereich von 15 000 bis 200 000, vorzugsweise von 22 000 bis 70 000 (membranosmometrisch bestimmt in Tetrahydrofuran); ihre Mooney-Viskositäten gemäß DIN 53 523 betragen im allgemeinen 1 bis 120, vorzugsweise 10 bis 40 ML (1 + 4) 100°C.

Die erfindungsgemäß hergestellten Copolymerisate eignen sich als Fließverbesserer für Rohöle und Mitteldestillate (DIN 7728 T1), als Schmelzklebstoffe, für die Thermoplast- und Duroplastmodifikation, als Mischkomponente von Kautschuken und für die Herstellung von Formkörpern, wie von Kabeln und Gummiartikeln.

In Mischungen mit anderen Polymeren entfalten die erfindungsgemäß hergestellten Ethylen/Acrylnitril-Copolymerisate eine gewisse Weichmacherwirkung. Derartige "andere Polymere" umfassen beispielsweise Polyvinylchlorid; Polymethylmethacrylat; Copolymerisate von Styrol, $\alpha$-Methylstyrol und p-Methylstyrol mit Acrylnitril, Methacrylnitril, Vinylacetat, Acrylaten, Methacrylaten, Maleinsäureanhydrid; Polyacrylnitril und Copolymerisate des Acrylnitrils mit Acrylaten, Methacrylaten, Maleinsäureanhydrid; ABS; Polyvinylidenchlorid; Celluloseester; Polycarbonate; Polyamide; Polyester; Ethylen- und Propylenhomo- und -copolymerisate; Polyphenylenoxid; Polyphenylensulfid; Polyvinylacetat; Polyvinylalkohol.

Die beschriebenen, erfindungsgemäß hergestellten Ethylen/Acrylnitril-Copolymerisate eignen sich auch als Mischungskomponente für andere Kautschuke, wie z.B. kautschukartige Homo- und Copolymerisate von Butadien, Isopren, Chloropren, Acrylnitril, Vinylacetat, Estern von Acryl- bzw. Methacrylsäure und $C_1$-$C_8$-Mono- bzw. Dialkoholen; Vinyliden- und Vinylchlorid, Ethylen.

Die erfindungsgemäß hergestellten Copolymerisate eignen sich auch als Mischungskomponente für Fluorkautschuke (Polymerisate auf Basis von Vinylidenfluorid, Tetrafluorethylen, Hexafluorpropan sowie perfluorierter Vinylether), für Epichlorhydrinhomo- und -copolymere (insbesondere für -Copolymere mit Ethylenoxid und Propylenoxid) sowie für Nitrilkautschuke.

Die erfindungsgemäß hergestellten Ethylen/Acrylnitril-Copolymerisate lassen sich auch als Zusatzstoffe für dreidimensional vernetzbare Polymere, wie z.B. Phenol/Formaldehyd-Harze, Harnstoff/Formaldehyd-Harze, ungesättigte Polyesterharze, einsetzen.

Für die Mischungen der erfindungsgemäß hergestellten Ethylen/Acrylnitril-Copolymerisate können die erfindungsgemäß hergestellten Copolymerisate in Mengen innerhalb weiter Grenzen, z.B von 1 bis 99, vorzugsweise von 10 bis 90, insbesondere von 10 bis 40 und 60 bis 90 Gew.-%, Bezogen auf Mischung, verwendet werden.

Für die Mischung der erfindungsgemäß hergestellten Copolymerisate mit anderen Polymeren können die erfindungsgemäßen Copolymerisate unvulkanisiert oder vulkanisiert eingesetzt werden. Die Vulkanisation kann - gegebenenfalls nach Zugabe von Füllstoffen, and/oder Stabilisatoren etc. - durch Vernetzung mit Peroxiden oder mit mehrfunktionellen, vernetzend wirkenden Verbindungen wie z.B. Triallylcyanurat, Triallylisocyanurat, Bismaleinimiden oder Divinylbenzol, erfolgen.

3

Erfindungsgemäß hergestellte Copolymerisate, die neben Ethylen- und Acrylnitrileinheiten copolymerisierte Reste der weiter oben beschriebenen Comonomeren mit reaktiven Gruppen enthalten, können mit anderen Vernetzungschemikalien vernetzt werden. Hierfür kommen in Frage: Salzvulkanisation mit Metalloxiden wie Zinkoxid, Magnesiumoxid, Calciumoxid bei carboxylgruppenhaltigen Polymerisaten, Vernetzung mit Diaminen bzw. Disulfiden bei epoxidhaltigen und anhydridhaltigen Polymerisaten; Vernetzung mit Diisocyanaten bei hydroxylgruppenhaltigen Polymerisaten; Vernetzung mit elementarem Schwefel oder Schwefelspendern bei doppelbindungshaltigen und chlorhaltigen Polymerisaten oder Polymerisaten, die Kohlenmonoxid eingebaut enthalten. Neben den genannten Vernetzungsreaktionen sind auch Vulkanisationsreaktionen wie z.B. die Harzvulkanisation oder die Vernetzung mit Chinonen geeignet.

"Vulkanisiert" im Sinne der Erfindung bedeutet, daß bei 10-stündiger Extraktion im Soxhlet-Aufsatz mit Toluol als Extraktionsmittel weniger als 3, vorzugsweise weniger als 1 Gew.-%, Bezogen auf Copolymerisat, extrahierbar ist.

Bei der Herstellung von Mischungen mit anderen Polymeren kann man die bereits vulkanisierten Copolymerisate zusetzen, wird aber meist die Copolymerisate in nicht-vulkanisierter Form den nicht-vulkanisierten Kautschuken zusetzen und dann beide gemeinsam vulkanisieren. Die letzte Ausführungsform läßt sich auch auf die Mischung mit Thermoplasten, wie z.B. mit Ethylen/Vinylacetat-Copolymerisaten mit VA-Gehalten von 1 bis weniger als 30 Gew.-% anwenden.

Die erfindungsgemäß hergestellten Copolymerisate können als solche oder in Form der oben beschriebenen Mischungen zur Herstellung von vulkanisierten Formkörpern, Folien und Überzügen jeglicher Art verwendet werden, wie z.B. für die Herstellung von Schläuchen, Dichtungen, Tansportbändern, Kraftübertragungselementen wie Zahn- und Keilriemen sowie Isoliermaterialien für die Schall- und Schwingungsdämpfung.

Die Prozentangaben der nachfolgenden Beispiele beziehen sich auf das Gewicht; Teile sind Gewichtsteile.

Beispiele

Die Versuche wurden in einem kontinuierlich durchströmten stopfbuchslosen 700 ml-Hochdruckrührautoklaven mit idealer Rückvermischung durchgeführt. Als Initiator wurde tert.-Amylperpivalat verwendet.

Die verwendeten Reaktionsparameter sind in der unten stehenden Tabelle zusammengefaßt.

|  | Beispiel | Vergleich |
|---|---|---|
| Reaktionsdruck [bar] | 1850 |  |
| Reaktionstemperatur [$^0$C] | 230 |  |
| Temperatur der Einsatzstoffe [$^0$C] | 40 |  |
| Ethylen [kg/h] | 20 |  |
| Acrylnitril [kg/h] | 0,98 | 0,97 |
| Methacrylsäureanhydrid [g/h] | 20 | - |
| [ppm] | 950 | - |
| Umsatz [%] | 14,1 |  |
| Acrylnitrilgehalt | 30,8 | 30,5 |
| MFI [g/10 min] bei 2,16 kp /190$^0$C | 20 | ca.500 |
| Gelanteile | 0 | 0 |
| Klebrigkeit | wenig | stark |

**Patentansprüche**

1.   Verfahren zur Herstellung von Ethylen/Acrylnitril-Copolymerisaten mit Gehalten an einpolymerisiertem Acrylnitril von 10 bis 90 Gew.-% durch Massepolymerisation der Monomeren nach dem Hochdruckverfahren bei Drucken von 500 bis 5000 bar, dadurch gekennzeichnet, daß man die Polymerisation in Gegenwart von 50 ppm bis 2 Gew.-%, Bezogen auf eingesetzte polymerisierbare Monomere, (Meth-) Acryloylverbindung mit mindestens 2 Acryloyl- oder Methacryloylgruppen pro Molekül durchführt, wobei das Polymer nur aus Ethylen-, Acrylnitril- und (Meth-)Acryloyl - Einheiten besteht.

2. Verfahren nach Anspruch 1 bei Drucken von 1000 bis 3000 bar.

3. Verfahren nach Ansprüchen 1 und 2 in Gegenwart von 100 ppm bis 1 Gew.-% (Meth-)Acryloylverbindung mit mindestens 2 Acryloyl- oder Methacryloylgruppen pro Molekül.

4. Verfahren nach Ansprüchen 1 bis 3, wonach als (Meth-)Acryloylverbindung Acrylsäureanhydrid oder Methacrylsäureanhydrid ausgewählt werden.

5. Ethylen/Acrylnitril-Copolymerisate mit Gehalten an einpolymerisiertem Acrylnitril von 10 bis 90 Gew.-% erhältlich nach dem Verfahren des Anspruchs 1.

6. Verwendung der Copolymerisate nach Anspruch 5 als Fließverbesserer, als Klebstoffbindemittel und als Mischungskomponente für Thermoplaste, Kautschuke und Duroplaste.

7. Verwendung der Copolymerisate nach Anspruch 5 zur Herstellung von Formkörpern.

8. Verwendung der Copolymerisate nach Anspruch 5 zur Herstellung von Vulkanisaten.

## Claims

1. A process for the production of ethylene/acrylonitrile copolymers containing from 10 to 90% by weight copolymerized acrylonitrile by bulk polymerization of the monomers by the high-pressure method under pressures of 500 to 5, 000 bar, characterized in that the polymerization is carried out in the presence of from 50 ppm to 2% by weight, based on the polymerizable monomers used, of a (meth)acryloyl compound containing at least two acryloyl or methacryloyl groups per molecule, the polymer consisting of ethylene, acrylonitrile and (meth)acryloyl units.

2. A process as claimed in claim 1 carried out under pressures of from 1,000 to 3,000 bar.

3. A process as claimed in claims 1 and 2 carried out in the presence of from 100 ppm to 1% by weight of a (meth)acryloyl compound containing at least two acryloyl or methacryloyl groups per molecule.

4. A process as claimed in claims 1 to 3, characterized in that acrylic anhydride or methacrylic anhydride is used as the (meth)acryloyl compound.

5. Ethylene/acrylonitrile copolymers containing from 10 to 90% by weight copolymerized acrylonitrile obtainable by the process claimed in claim 1.

6. The use of the copolymers claimed in claim 5 as flow promoters, as adhesive binders and as a mixture component for thermoplastics, rubbers and thermosets.

7. The use of the copolymers claimed in claim 5 for the production of moldings.

8. The use of the copolymers claimed in claim 5 for the production of vulcanizates.

## Revendications

1. Procédé de préparation de copolymères éthylène/acrylonitrile à des teneurs en acrylonitrile polymérisé de 10 à 90 % en poids par polymérisation en masse des monomères par le procédé à haute pression, à savoir des pressions de 500 à 5 000 bar, caractérisé en ce que l'on effectue la polymérisation en présence de 50 ppm à 2 % en poids, par rapport aux monomères polymérisables mis en oeuvre, d'un dérivé (méth)acryloylique à au moins deux groupes acryloyle ou méthacryloyle par molécule, le polymère consistant uniquement en motifs éthylène, acrylonitrile et (méth)acryloyle.

2. Procédé selon la revendication 1, dans lequel on opère à des pressions de 1 000 à 3 000 bar.

3. Procédé selon les revendications 1 et 2, dans lequel on opère en présence de 100 ppm à 1 % en poids de dérivé (méth)acryloylique à au moins deux groupes acryloyle ou méthacryloyle par molécule.

4. Procédé selon les revendications 1 à.3, dans lequel le dérivé (méth)acryloylique consiste en l'anhydride acrylique ou l'anhydride méthacrylique.

5. Copolymères éthylène/acrylonitrile à des teneurs en acrylonitrile polymérisé de 10 à 90 % en poids, obtenus par le procédé de la revendication 1.

6. Utilisation des copolymères de la revendication 5 en tant qu'améliorants de fluidité, liants pour adhésifs et composants de mélanges pour des résines thermoplastiques, des caoutchoucs et des résines duroplastiques.

7. Utilisation des copolymères de la revendication 5 pour la fabrication d'objets moulés.

8. Utilisation des copolymères de la revendication 5 pour la fabrication de produits vulcanisés.